# EUROPÄISCHE PATENTSCHRIFT

(11) **EP 1 132 274 B1**
(45) Veröffentlichungstag und Bekanntmachung des Hinweises auf die Patenterteilung: **07.04.2004**
(21) Anmeldenummer: 01100059.3
(22) Anmeldetag: 10.01.2001
(51) Int. Cl.: B60T 13/68, B60T 8/36

(54) **Bremsdruckmodulator für elektronische Bremsanlage**
Brake Pressure Modulator for electronic braking system
Modulateur de pression de freinage pour système de freinage électronique

(30) Priorität: 26.02.2000 DE 10009118; 15.12.2000 DE 10062625
(43) Veröffentlichungstag der Anmeldung: 12.09.2001
(73) Patentinhaber: WABCO GmbH & CO. OHG, 30453 Hannover (DE)
(72) Erfinder: Frank, Dieter, 30171 Hannover (DE); Homann, Peter, 31535 Neustadt (DE); Kranz, Andreas, Dr., 31515 Wunstorf (DE); Sieker, Armin, 33611 Bielefeld (DE); Meier, Dirk, 30926 Seelze (DE); Schreiber, Gerdt, 30916 Isernhagen (DE); Wolff, Hans-Klaus, 31832 Springe (DE); Schappler, Hartmut, 30455 Hannover (DE)
(74) Vertreter: Schrödter, Manfred

(56) Entgegenhaltungen:
- EP-A- 0 547 407
- DE-A- 4 227 084

## Beschreibung

Die Erfindung betrifft einen Bremsdruckmodulator gemäß dem Oberbegriff des Patentanspruchs 1.

Eine derartiger Bremsdruckmodulator, dort Druckregelmodul genannt, ist aus der DE 42 27 084 A1 bekannt.

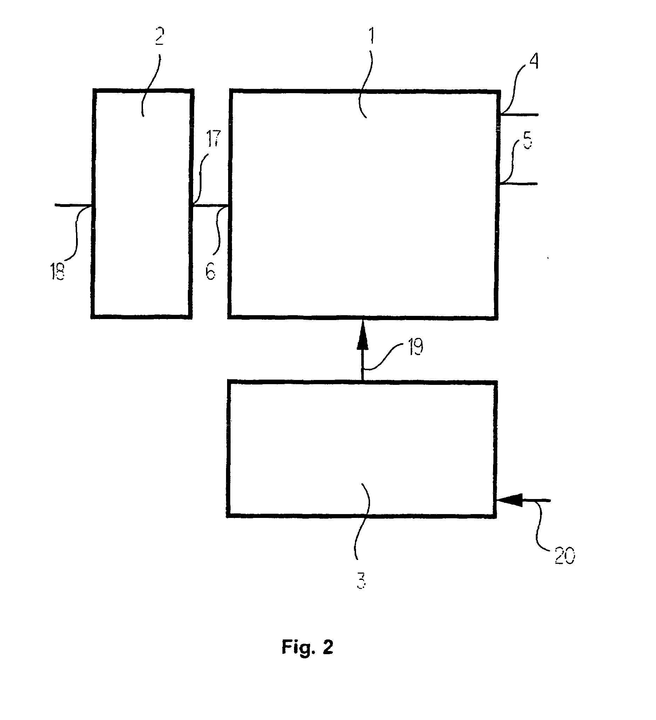

Die bekannte Schrift zeigt ein zwei-kanaliges Druckregelmodul [dort Fig. 2], bei dem für beide Kanäle als Umschaltventil ein gemeinsames 3/2-Wege-Magnetventil [dort (12)] vorgesehen ist, das die zu den weiteren Magnetventilen führende Leitung [dort (15)] entweder mit dem Vorratsdruck [dort (17) in betätigtem Zustand des Ventiles (12)] oder mit einem Steuerdruck [dort (13) in unbetätigtem Zustand des Ventiles (12)] verbindet; für das Folgende sei angenommen, daß das 3/2-Wege-Magnetventil betätigt ist, so daß der Vorratsdruck an den weiteren Magnetventilen anliegt - dies stellt den Fall der Druckregelung dar.

Betrachtet wird einer von beiden symmetrisch aufgebauten Druckregelkreisen, nämlich derjenige, für den dort die Ventile (9'), (7), (3) vorgesehen sind. Das 3/2-Wege-Magnetventil [dort (9')] gibt die Richtung der Druckveränderung vor; in unbetätigtem Zustand [wie in dieser Zeichnung dargestellt] erfolgt eine Druckerhöhung, da der Vorratsdruck wirksam ist, in betätigtem Zustand erfolgt eine Absenkung durch die Verbindung mit der Entlüftung [dort (11')]. Zu diesem Ventil ist in Reihe geschaltet das 2/2-Wege-Magnetventil [dort (7)], das entweder eine Verbindung zu einem Steuereingang des nachfolgenden Relaisventils herstellt [dort Steuereingang (5) in der gezeichneten, nicht betätigten Ventilstellung] oder diesen Steuereingang abschließt [betätigte Ventilstellung].

Durch die Reihenschaltung beider Ventile müssen diese gemeinsam in einen bestimmten Zustand gebracht werden, um eine gewünschte Druckveränderung am Steuereingang zu bewirken. Sie sind also nicht unabhängig voneinander, sondern nur gleichzeitig miteinander zu betreiben. Dies stellt einen kostenmäßigen Nachteil dar, weil durch die Verwendung eines 3/2-Wege-Magnetventiles mit Umschaltfunktion [dort (9')] und den Anforderungen an hohe Dichtigkeit an den beiden entsprechenden Ventilsitzen relativ hohe Aufwendungen erforderlich sind.

Bei Verwendung dieses 3/2-Wege-Magnetventiles [dort (9')] entsteht wieder durch den konstruktiven Aufbau von 3/2-Wege-Magnetventilen in ihrer üblichen Bauform mit am Magnetanker vorgesehenen Elastomer-Dichtsitzen für beide Schaltstellungen, wie dies unten erläutert ist, ein Geschwindigkeitsnachteil, der sich in einer verringerten Taktrate äußert.

Der Erfindung liegt deshalb die Aufgabe zugrunde, die Vorsteuereinheit für einen Bremsdruckmodulator der eingangs genannten Art derart zu verändern, daß das Zeitverhalten verbessert wird.

Diese Aufgabe wird durch die im Patentanspruch 1 angegebene Erfindung gelöst. Weiterbildungen und vorteilhafte Ausführungsbeispiele sind in den Unteransprüchen angegeben.

Dadurch, daß bei der Erfindung auch im Normalbetrieb der Druck am pneumatischen Ausgang der Vorsteuereinheit durch den Redundanzdruck beeinflußt wird, entsteht der Vorteil, daß bei einer Vollbremsung der Druckaufbau beschleunigt und bei einer ABS-Bremsung der Druckabbau verkürzt wird.

Weiterbildungen der Erfindung, welche die pneumatische Schaltung für die Vorsteuereinheit betreffen, haben den Vorteil reduzierter Herstellkosten.

Bei der bekannten Schrift werden anhand verschiedener Ausführungsbeispiele Anregungen für Einsparungen durch Reduzierung der Anzahl von Magnetventilen und der in diesem Zusammenhang möglichen Einsparung von Pneumatik-Leitungen und ähnlichen Komponenten gemacht. Die Erfindung löst sich von der Vorstellung, daß die Anzahl als solche weitgehend maßgeblich ist [die unten erläuterte Anzahl von 3 Magnetventilen pro Kanal bei der Erfindung liegt sogar leicht über der Anzahl von 2,5 Magnetventilen pro Kanal in Fig. 2 der bekannten Schrift] und legt den Schwerpunkt auf die Ventilkonstruktion als solche und auf eine pneumatische Schaltung, mit der Magnetventile dieser Ventilkonstruktion optimal zu betreiben sind.

Bei Weiterbildungen der Erfindung, bei denen ein in der unten erläuterten Vorsteuereinheit zur Druckerhöhung vorgesehenes Magnetventil parallel geschaltet ist, zu einem Magnetventil, welches zur Druckabsenkung dient, entsteht der Vorteil, daß beide Ventile gleichzeitig ansteuerbar sind. Durch die Wahl unterschiedlicher Nennweiten und die Wahlmöglichkeit, wie erwähnt, beide Ventile gleichzeitig, oder auch nur eines von beiden Ventilen für die Druckmodulation zu nutzen, lassen sich Ausbildungen darstellen, bei denen z. B. eine hohe Genauigkeit oder eine hohe Geschwindigkeit bewirkt wird; dies kann sogar in Kombination geschehen, so daß eine hohe Geschwindigkeit mit einer hohen Genauigkeit vereinbar ist.

Eine Weiterbildung der Erfindung hat den Vorteil, daß durch die Wahl von metallisch dichtenden Ventilsitzen für den betätigten Zustand der Magnetventile diese besonders platzsparend zu gestalten sind. Die Magnetventile schalten wegen der kleinen Hübe sehr schnell und sie erlauben wegen dieser kleinen Hübe und der geringen Anforderungen an die Ankerkraft eine kleine Baugröße der magnetkrafterzeugenden Magnetspule und damit der gesamten Baueinheit.

Entsprechend einer anderen Weiterbildung der Erfindung werden die Magnetanker vereinheitlicht und durch die Verwendung gleichartiger, in größerer Stückzahl gefertigter Magnetanker werden die Kosten verringert.

Die Erfindung wird im folgenden anhand eines Ausführungsbeispiels, das in der Zeichnungen dargestellt ist, näher erläutert.

Es zeigt:
- Fig. 1: eine neuartige pneumatische Schaltung der Vorsteuereinheit für einen Bremsregelkreis des Bremsdruckmodulators mit dem am pneumatischen Ausgang der Vorsteuereinheit angeschlossenen luftmengenverstärkenden Relaisventil;
- Fig. 2: das Blockschaltbild für einen Bremsdruckmodulator mit einer Vorsteuereinheit nach Fig. 1;
- Fig. 3: die Ventilkonstruktion für eine Vorsteuereinheit nach Fig. 1 in Form eines pneumatischen Ventilblockes;
- Fig. 4: die Ausführung der Magnetanker und die Art des Einbaus in eine Magnetspule zur Bildung eines hermetisch dichtenden Ventilsitzes für den nicht bestromtem Magneten und eines nicht hermetisch dichtenden Metall-Metall-Ventilsitzes für den bestromtem Magneten, zur Realisierung von 2/2-Wege-Magnetventilen in stromlos offener wie stromlos geschlossener Version, als auch von 3/2-Wege-Magnetventilen unter Verwendung gleichartiger Magnetanker und Magnetspulen;
- Fig. 5: das Verfahren der Parallelschaltung von Magnetventilen der Vorsteuereinheit, das sowohl zu einer Verbesserung des Druck-Zeitverhaltens als auch zu einer Verbesserung der Druck-Stufbarkeit führt;
- Fig. 6: die Anordnung von Komponenten einer elektronischen Bremsanlage bei Anwendung des Verfahrens der Parallelschaltung von Vorsteuereinheits-Magnetventilen auf ein Zugfahrzeug.

Ein elektronisch geregeltes Bremssystem [EBS] für Anhängerfahrzeuge verfügt über mehrere unabhängig voneinander arbeitende Bremsregelkreise für die Radbremsen des Fahrzeugs [mehrkanaliges System]. Ein Bremsregelkreis, der einen Druckregelkanal für eine Radbremse darstellt, besteht aus einer Vorsteuereinheit, die aus Magnetventilen aufgebaut ist, aus einem luftmengenverstärkenden Relaisventil, aus mindestens einem Bremszylinder für die Radbremsen, einem an einer geeigneten Stelle angebrachten Bremsdrucksensor und aus einer elektronischen Steuereinrichtung, welche die Bremsdruckregelung durchführt.

Die Bremsregelkreise für die unterschiedlichen Kanäle des mehrkreisigen Systems sind gleichartig aufgebaut, so daß mit der Beschreibung eines Bremsregelkreises die anderen Bremsregelkreise ebenfalls beschrieben sind. Dem Ausführungsbeispiel wird daher die Konfiguration einer Basisvariante für Anhänger-EBS-Systeme zugrundegelegt, welche aus einem Sattelauflieger mit zwei Achsen besteht, es handelt sich hier um ein 4S/2M-System [vier ABS-Sensoren für vier Räder und zwei Modulatorkanäle für die Radbremsen der linken bzw. der rechten Seite]; die Bremsdruckregelung wird also seitenweise durchgeführt.

Das EBS-Anhängerfahrzeug ist mit einem EBS-Zugfahrzeug über eine elektrische und über eine pneumatische Schnittstelle verbunden. Die elektrische Schnittstelle besteht aus der digitalen Datenschnittstelle nach ISO 1199-2; die pneumatische Schnittstelle besteht aus erstens der Vorratsleitung, die den Anhänger mit Druckluft versorgt, und zweitens der Bremsleitung, die in dem Anhänger mit einem Anhängerbremsventil verbunden ist. Das Anhängerbremsventil steuert an seinem pneumatischen Ausgang einen Bremsdruck aus, der von dem auf der pneumatischen Bremsleitung übertragenen Bremsdruck abgeleitet ist und diesem im wesentlichen entspricht.

Auf der Seite des EBS-Zugfahrzeuges sind die Vorrats- und die Bremsleitung an ein Anhängersteuerventil angeschlossen. Im Zusammenwirken von Anhängersteuer- und Anhängerbremsventil ist die Abriß-Sicherung realisiert, wie sie von konventionell gebremsten Fahrzeugzügen [Zugfahrzeug-Anhängerfahrzeug] bekannt ist; bei einem derartigen Abriß wird in der bekannten Art und Weise vom Anhängerbremsventil ebenfalls ein Bremsdruck ausgesteuert.

Da, wie erläutert, die Abriß-Sicherung in gleicher Weise wie bei konventionell gebremsten Fahrzeugen realisiert ist, kann das EBS-Anhängerfahrzeug auch hinter einem Zugfahrzeug mit konventioneller Bremsanlage betrieben werden. Das Anhängerbremsventil im EBS-Anhängerfahrzeug enthält so auch die erforderlichen Funktionen eines herkömmlichen Anhängerbremsventiles in konventionellen Bremsanlagen wie Abrißfunktion und Rückschlagventil.

Im EBS-Anhängerfahrzeug dient der vom Anhängerbremsventil ausgesteuerte Druck zur pneumatisch redundanten Bremsung im Falle eines EBS-Ausfalls; außerdem dient er unter Verwendung eines im Anhängerbremsventil angeordneten Drucksensors zur Ermittlungen des elektrischen Sollwertes für den Fall, daß der EBS-Anhänger an einem konventionellen Zugfahrzeug, d. h. an einem Nicht-EBS-Zugfahrzeug betrieben wird. Dieser ausgesteuerte Druck stellt den Redundanzdruck dar.

In Fig. 2, dem Blockschaltbild für den Bremsdruckmodulator, sind die Vorsteuereinheit (1) und die Funktionseinheiten, mit denen die Vorsteuereinheit zusammenwirkt, nämlich die elektronische Steuereinheit (3) und das luftmengenverstärkende Relaisventil (2), dargestellt.

Die Vorsteuereinheit (1) verfügt über einen ersten pneumatischen Eingang (4), der mit dem Versorgungsdruck verbunden ist, und über einen zweiten pneumatischen Eingang (5), der mit dem pneumatischen Ausgang des nicht dargestellten Anhängerbremsventiles zur Übertragung des Redundanzdruckes verbunden ist. Ein pneumatischer Ausgang (6) der Vorsteuereinheit (1) ist mit dem Eingang (17) des Relaisventiles (2) verbunden.

Die elektrische Schnittstelle ist über eine Leitung (20) mit der elektrischen Steuereinheit (3) zur Übertragung der elektrischen Bremswertvorgabe verbunden und es sind ausgehend von der elektronischen Steuereinheit (3) elektrische Steuerleitungen (19) für die Magnetventile der Vorsteuereinheit (1) vorgesehen.

Der pneumatische Ausgang (18) des Relaisventiles (2) ist mit den nicht dargestellten Bremszylindern für diesen Bremsregelkreis verbunden.

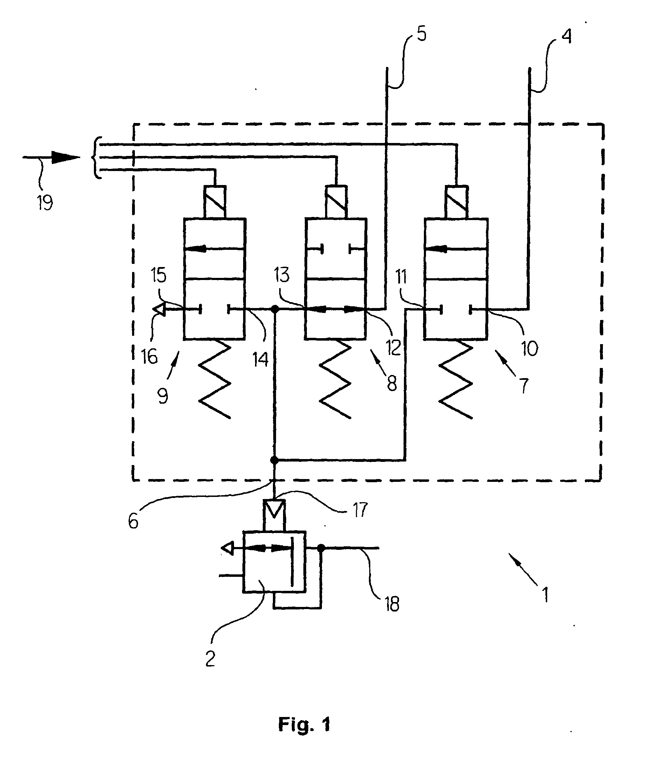

Entsprechend Fig. 1 sind in der Vorsteuereinheit (1) drei Magnetventile vorgesehen; ein erstes Magnetventil (7) verfügt über einen ersten Anschluß (10) und einen zweiten Anschluß (11), ein zweites Magnetventil (8) verfügt über einen ersten Anschluß (12) und einen zweiten Anschluß (13) und ein drittes Magnetventil (9) verfügt über einen ersten Anschluß (14) und einen zweiten Anschluß (15).

Der erste Anschluß (10) des ersten Magnetventiles (7) ist mit dem ersten pneumatischen Eingang (4) der Vorsteuereinheit (1) verbunden, der erste Anschluß (12) des zweiten Magnetventiles (8) ist mit dem zweiten pneumatischen Eingang der Vorsteuereinheit (1) verbunden, der zweite Anschluß (11) des ersten Magnetventiles (7) ist mit dem pneumatischen Ausgang (6) der Vorsteuereinheit (1) verbunden, der zweite Anschluß (13) des zweiten Magnetventils (8) ist mit dem ersten Anschluß (14) des dritten Magnetventiles (9) und dem pneumatischen Ausgang (6) der Vorsteuereinheit (1) verbunden und der zweite Ausgang (15) des dritten Magnetventiles (9) ist mit einer Drucksenke (16) verbunden.

Das erste Magnetventil (7) und das dritte Magnetventil (9) sind als stromlos geschlossene 2/2-Wege-Magnetventile ausgestaltet, während das zweite Magnetventil (8) als stromlos offenes 2/2-Wege-Magnetventil ausgebildet ist.

Die Magnetventile (7), (8), (9) der Vorsteuereinheit (1) dienen zur Festlegung des Druckes in der Steuerkammer des Relaisventiles (2); sie sind in taktender Betriebsweise zu betreiben.

Das zweite Magnetventil (8) dient zur Übertragung des Redundanzdruckes in die Steuerkammer des Relaisventiles (2), im stromlos offenen Zustand folgt der Steuerkammer-Druck, wenn die anderen Magnetventile (7) und (9) nicht betätigt sind, dem am zweiten pneumatischen Eingang (5) der Vorsteuereinheit (1) angelegten Redundanzdruck; dieses Redundanzdruck-Ventil dient also sowohl als Belüftungs- als auch als Entlüftungsventil für den Steuerkammer-Druck. Im stromlos geschlossenen Zustand trennt das zweite Magnetventil (8) den Redundanzdruck von der Steuerkammer des Relaisventiles (2) ab.

Das erste Magnetventil (7) ist durch seine Verbindung mit dem Vorratsdruck als Belüftungs- und das dritte Magnetventil (9) ist durch seine Verbindung mit der Drucksenke als Entlüftungs-Ventil für die Steuerkammer des Relaisventiles (2) vorgesehen.

Die Magnetventile (7), (8) und (9) sind im Gegensatz zur Reihenschaltung von Ventilen nach der eingangs genannten Schrift parallel zueinander geschaltet, wodurch sie auch gleichzeitig betätigt werden können.

So kann z. B. bei einer Vollbremsung, bei der das Belüftungs-Ventil (7) zur Druckerhöhung betätigt wird, das Redundanzdruck-Ventil (8) gleichzeitig in seiner nicht betätigten Stellung verharren: Der während der Vollbremsung ansteigende Redundanzdruck unterstützt die Belüftung der Steuerkammer des Relaisventiles (2), wodurch die Druckaufbauzeit verkürzt wird. Ebenfalls kann während einer Bremsbetätigungs-Rücknahme zusätzlich zur Betätigung des Entlüftungsventiles (9) das Redundanzventil (8) im unbetätigten Zustand verbleiben, wodurch die Zeit für den Druckabbau des Steuerkammer-Druckes im Relaisventil (2) ebenfalls verkürzt wird.

Durch die unten erläuterte Gleichheit der Magnetspulen und Ventilanker der Magnetventile (7), (8) und (9) weisen diese Ventile ein gleichartiges Schaltverhalten auf, wodurch ein gewünschtes Zeitverhalten von Druckauf- und Druckabbau im Steuerraum des Relaisventiles (2) durch die Wahl von geeigneten Taktzeiten für die Magnetventile sehr übersichtlich zu gestalten ist.

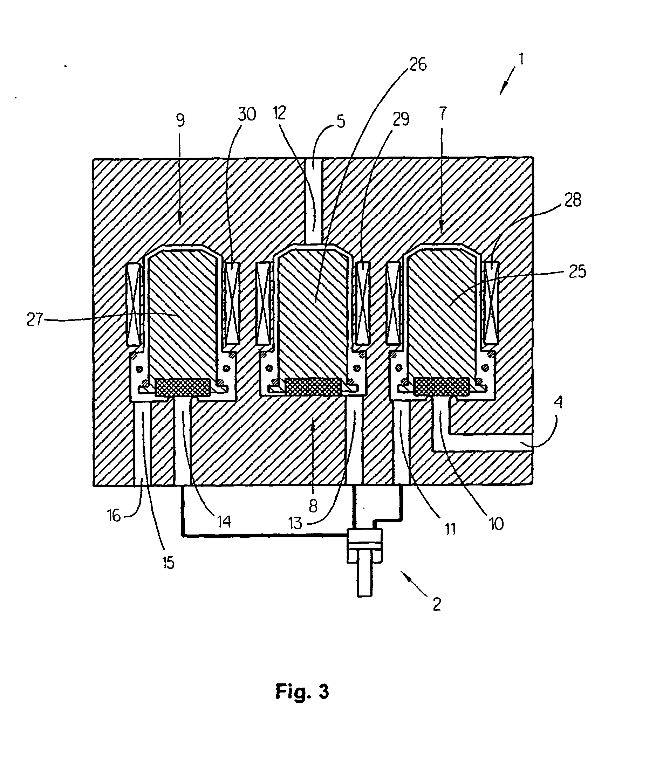

In Fig. 3 ist die Konstruktion der Magnet-Ventile in einem Ventilblock mit ihrer Verrohrung dargestellt. Der Magnetanker (25) des Magnetventiles (7) ist baugleich zu dem Magnetanker (26) des Magnetventiles (8) und zu dem Magnetanker (27) des Magnetventiles (9) aufgebaut; die Magnetspule (28) des Magnetventiles (7) ist ebenfalls baugleich zu der Magnetspule (29) des Magnetventiles (8) und zu der Magnetspule (30) des Magnetventiles (9) aufgebaut. Bezüglich der Darstellung der Verrohrung sei angemerkt, daß entsprechend der vorstehenden Erläuterungen die Zusammenschaltung der Anschlüsse (11), (13) und (14) den pneumatischen Ausgang (6) der Vorsteuereinheit (1) darstellt.

Die Magnetspulen enthalten magnetflußbündelnde ferromagnetische Joche, die in geeigneter Weise die Magnetkraft erhöhen. Im Gehäuse des Ventilblockes, in welches die Magnetspulen eingebaut sind, befinden sich ebenfalls magnetflußbündelnde Elemente, die magnetkraftverstärkend wirken und die in geeigneter Form, z. B. aus ferromagnetischen Materialien hergestellt sind. Aus Vereinfachungsgründen zur besseren Übersicht sind die magnetflußbündelnden Elemente als Bestandteil des Ventilblock-Gehäuses bzw. der Magnetspulen (28), (29), (30) nicht dargestellt.

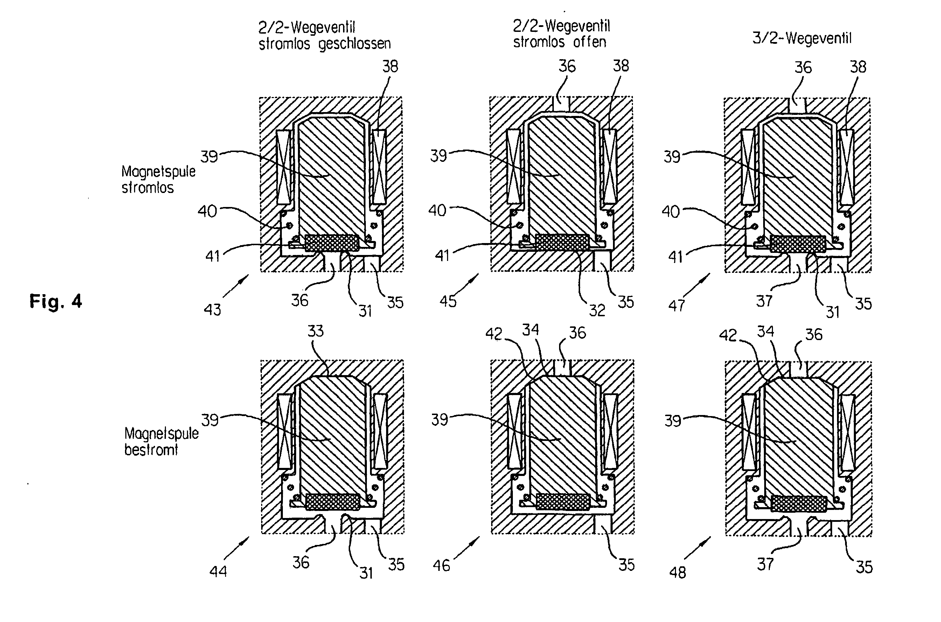

In Fig. 4 ist gezeigt, wie unter Verwendung gleichartiger Magnetanker Magnetventile mit unterschiedlicher Funktion realisiert werden können. Die Bezugszeichen sind für die einzelnen Ventilvarianten einheitlich gewählt, so daß sie von einer Ventilkonstruktion zu einer anderen Ventilkonstruktion direkt übertragbar sind.

Unter dem Bezugszeichen (43) ist ein stromlos geschlossenes 2/2-Wege-Magnetventil in der Stellung der stromlosen Magnetspule (38) angegeben. Da in dieser Stellung keine Magnetkraft wirkt, wird der Magnetanker (39) durch die Wirkung der Magnetanker-Rückstellfeder (40) bis zu einer Hubbegrenzung (31) verschoben, bei der an dieser Stelle ein Dichtsitz vorgesehen ist. Der Elastomereinsatz (41) kommt zur Anlage mit dem Dichtsitz (31) und der erste Anschluß (35) ist hermetisch gegenüber dem zweiten Anschluß (36) abgedichtet.

Unter dem Bezugszeichen (44) ist das stromlos geschlossene 2/2-Wege-Magnetventil in dem Zustand der bestromten Magnetspule (38) gezeichnet. Der Magnetanker (39) kommt an einer durch die Magnetkraft bedingten Hubbegrenzung (33) zur Anlage, der Ventilsitz öffnet, und der erste Anschluß (35) ist mit dem zweiten Anschluß (36) verbunden.

Die nächste Ventil-Variante stellt ein stromlos offenes 2/2-Wege-Magnetventil dar, das unter dem Bezugszeichen (45) im stromlosen Schaltzustand gezeichnet ist. Über die Wirkung der Magnetanker-Rückstellfeder (40) kommt der Magnetanker an einer Hubbegrenzung (32) zur Anlage, die jedoch in diesem Fall nicht mit einem Dichtsitz ausgestaltet ist. In dieser Schaltstellung ist der erste Anschluß (35) mit dem zweiten Anschluß (36) verbunden.

Das stromlos offene 2/2-Wege-Magnetventil ist unter dem Bezugszeichen (46) im bestromten Schaltzustand gezeichnet. Der Magnetanker (39) kommt an einer Hubbegrenzung (34) zur Anlage und bildet an dieser Stelle durch die Ausformung (42) des Magnetankers mit dem zweiten Anschluß (36) einen Metall-Metall-Ventilsitz: Der erste Anschluß (35) ist von dem zweiten Anschluß (36) abgetrennt. Der Metall-Metall-Ventilsitz ist im Gegensatz zum oben erläuterten Ventilsitz unter Verwendung des Elastomer-Einsatzes (41) nicht hermetisch dichtend, d. h., es treten Leckagen auf. Wie unten erläutert, ist die Schaltungstechnik für den Einsatz dieses Ventils derart gewählt, daß diese Leckagen ohne Bedeutung sind.

Um zu zeigen, daß mit diesem Realisierungsprinzip auch die bekannte Vorsteuereinheit nach der eingangs genannten Schrift DE 42 27 084 A1 realisierbar ist, ist unter den Bezugszeichen (47), (48) gezeigt, daß unter Verwendung des Magnetankers (39) auch ein 3/2-Wege-Magnetventil aufgebaut werden kann.

Unter dem Bezugszeichen (47) ist das 3/2-Wege-Magnetventil für den Schaltzustand der stromlosen Magnetspule (38) gezeichnet: Über die Wirkung der Magnetanker-Rückstellfeder kommt der Magnetanker (39) an der Hubbegrenzung (31) mit Dichtsitz zur Anlage. Über diesen Ventilsitz ist der erste Anschluß (35) gegenüber dem dritten Anschluß (37) abgetrennt, jedoch besteht eine Verbindung des ersten Anschlusses (35) zum zweiten Anschluß (36).

Unter dem Bezugszeichen (48) ist das 3/2-Wege-Magnetventil im bestromten Schaltzustand gezeichnet. Durch die Magnetkraft kommt der Anker an der Hubbegrenzung (34) mit dem zweiten Anschluß (36) zur Anlage und bildet mit der Ausformung (42) einen Metall-Metall-Dichtsitz. Hierdurch ist der erste Anschluß (35) vom zweiten Anschluß (36) abgetrennt, jedoch ist der erste Anschluß (35) mit dem dritten Anschluß (37) verbunden.

Beim Vergleich der pneumatischen Schaltung nach Fig. 1 mit der Ventilkonstruktion nach Fig. 3 ist gezeigt, daß für den Ruhezustand der Vorsteuereinheit, welcher durch den stromlosen Schaltzustand aller drei Magnetventile (7), (8) und (9) gegeben ist, durch die Wirkung der Magnetanker-Rückstellfedern nur hermetisch dichtende Ventilsitze im Einsatz sind: Die Magnetventile (7) und (9) sind geschlossen und das Magnetventil (8) ist geöffnet.

Erst bei einer gewünschten Veränderung des Steuerkammer-Druckes im Relaisventil (2) wird zur Druckerhöhung das Belüftungsventil (7) und zur Druckverringerung das Entlüftungsventil (9) jeweils in taktender Betriebsweise betätigt.

Wenn bei dieser Druckerhöhung bzw. Druckverringerung der Einfluß des Redundanzdruckes ausgeschaltet werden soll [die oben erläuterte Unterstützung der Be- oder Entlüftung der Relaisventil-Steuerkammer durch den ansteigenden bzw. abfallenden Redundanzdruck soll in diesem Fall nicht stattfinden], so wird das Redundanzdruckventil (8) betätigt und der am zweiten pneumatischen Eingang (5) anliegende Redundanzdruck wird über den in diesem Schaltzustand wirkenden Metall-Metall-Ventilsitz von der Relaisventil-Steuerkammer [pneumatischer Ausgang (6)] abgetrennt.

Da, wie vorstehend erwähnt, an diesem Ventilsitz Leckagen auftreten können, ist die Abtrennung nicht hermetisch, d. h. der vorliegende Redundanzdruck wird durch die Ventilsitz-Leckage den Steuerkammer-Druck im Relaisventil (2) in sehr geringem Maße beeinflussen. Dieser Einfluß ist jedoch unerheblich, da, wie erläutert, zur gleichen Zeit eine taktende Belüftung durch das Belüftungsventil (7) oder eine taktende Entlüftung über das Entlüftungsventil (9) stattfindet, wobei die jeweils vollen Querschnitte dieser Ventile wirksam sind. Der Leckagequerschnitt ist einerseits schon außerordentlich klein gegenüber den Ventilquerschnitten und andererseits wird ein Takten im geschlossenen Regelkreis durchgeführt, und zwar derart, daß solange auf- bzw. abgetaktet wird, bis der am pneumatischen Ausgang (18) des Relaisventiles (2) ausgegebene Bremsdruck einem von der elektronischen Steuereinheit berechneten Bremsdruck-Sollwert entspricht [der Berechnung des Bremsdruck-Sollwertes in der elektronischen Steuereinheit liegen neben der elektrischen Bremswertvorgabe durch die elektrische Schnittstelle, welche die Hauptvorgabe darstellt, weitere Einflußfaktoren durch die Beladung oder die ABS-Bremsregelung zugrunde]. Mit dem Erreichen des Bremsdruck-Sollwertes ist das Takten beendet und die Magnetventile (7) und (9) befinden sich wieder in ihrem stromlosen Schaltzustand; das Redundanzventil (8) bleibt weiter betätigt. Sollte es jetzt durch den Metall-Metall-Ventilsitz zu einer geringfügigen Druckabweichung der Steuerkammer des Relaisventiles (2) kommen, die durch eine Veränderung des Druckes am pneumatischen Ausgang (18) erkennbar wird, so wird im Rahmen der Druckregelung diese Druckabweichung durch ein einmaliges Takten des Belüftungsventiles (7) bzw. des Entlüftungsventiles (9) wieder kompensiert.

Beim Schließen eines Ventilsitzes über die Magnetkraft wird nach dem Beginn der Strombeaufschlagung der Magnetspule durch die räumliche Entfernung vom Magnetanker und Ventilsitz [der Eisenkreis ist nicht geschlossen] zunächst nur ein geringer magnetischer Kraftfluß aufgebaut. Um den Magnetanker überhaupt in Bewegung zu setzen, muß durch einen großen Strom eine hohe Betätigungskraft erzeugt werden, die nur einen Bruchteil der späteren Haltekraft für den Anker ausmacht. Durch die ständige Kraftbeaufschlagung in großer Höhe wird der Magnetanker eines Magnetventiles beschleunigt und baut damit kinetische Energie auf, die beim Auftreffen des Ankers am Ventilsitz wieder vernichtet wird.

Bei den üblichen Ventilen nach dem Stand der Technik wird die Dichtung am Ventilsitz durch einen Elastomer-Einsatz im Magnetanker hergestellt.

Damit die Vernichtung der kinetischen Beschleunigungsenergie des Ankers beim Auftreffen auf den Ventilsitz im Rahmen einer Dauerbelastung nicht zur Zerstörung des Elastomers führt, ist ein solcher Elastomer-Einsatz nicht starr sondern federnd mit dem Körper des Ankers verbunden. In der DE-A1-27 57 803 ist unter der dortigen Fig. 4 ein Magnetanker mit zwei Elastomer-Dichteinsätzen [dort (50'), (52')] für zwei Ventilsitze gezeigt, welche federnd gelagert sind [dort Federn (51), (53)]. Ein federnder Dichtsitz nach dieser Bauweise bedingt, damit die Federung überhaupt wirksam werden kann, einen relativ großen Ventilhub, der z. B. 1,2 mm beträgt. Eine derartige Konstruktion bewirkt auch eine bestimmte minimale Baugröße, damit eine federnde Konstruktion unterzubringen ist, was zu einer relativ großen Ankermasse führt, und dies bedingt wiederum eine entsprechende Verstärkung der Anker-Rückstellfeder. Die stärkere Rückstellfeder führt dann zu einer Erhöhung der erforderlichen Magnetkraft, die bei einer derartiger Ventilsitz-Konstruktion bei ca. 30 N liegt. Die Schaltzeit [Strombeaufschlagung der Magnetspule bis zum Schließen des Ventilsitzes] ist im wesentlichen durch die Zeit für den Stromaufbau in der Magnetspule gegeben und liegt typischerweise in der Größenordnung von 25 ms.

In einem Einsatz für Vorsteuerungen muß man diese Ventile üblicherweise mit einer Nennweite von ca. 2,2 mm ausstatten, um zu vermeiden, daß durch die Druckluft-Pilotleitungen, die die räumliche Entfernung eines Ventiles zu der drucksummierenden Relaisventil-Steuerkammer überbrücken, ein großer Druckabfall entsteht.

Beim Betrieb derartiger Vorsteuerventile in einem geschlossenen Druckregelkreis führt die Nennweite von ca. 2,2 mm dazu, daß der ausgesteuerte Druck nicht sehr feinfühlig abstufbar ist und die Schaltzeit von ca. 25 ms führt im Betrieb mit einem üblichen Abtastregler zu einer Begrenzung des realisierbaren Druckgradienten für den ausgesteuerten Druck.

Bei der Ventilkonstruktion nach der Erfindung kann dadurch, daß die Magnetanker nicht an zwei, sondern nur an einem Ende über einen Elastomer-Einsatz verfügt, und daß an dem diesem gegenüberliegenden Ende nur eine Ausformung zur Bildung eines Metall-Metall-Dichtsitzes vorhanden ist, eine kleine Bauweise gewählt werden. Dadurch wird die Masse des Magnetankers auf ca. 6 g reduziert und aufgrund der nur schwach ausgelegten Anker-Rückstellfeder ist eine Magnetkraft von nur ca. 6 N erforderlich.

Die Beschleunigungsfestigkeit der Ausformung am metallisch dichtenden Sitz wird dadurch gewährleistet, daß sie mit einer Beschichtung versehen ist, wie dies in der DE-A1-197 30 276 angegeben ist.

Dadurch, daß bei einem Metall-Metall-Dichtsitz das Dichten nicht durch "Elastomer-Eindrücken" erfolgt und kein Federweg erforderlich wird, kann ein sehr kleiner Ventilhub von ca. 0,5 mm gewählt werden. Mit diesem kleinen Ventilhub und der ohnehin schwach ausgelegten Anker-Rückstellfeder erübrigt sich auch eine federnde Lagerung des Elastomer-Einsatzes, wie dies beim obengenannten Stand der Technik der Fall ist.

Mit dem kleinen Magnetanker ergibt sich auch eine kleine Magnetspule und diese kleinen räumlichen Abmessungen erlauben es dann auch, für die Verrohrung zu dem Relaisventil (2) kurze Bohrungen vorzusehen, die die Druckluft nicht unzulässig drosseln.

Durch diese optimierten Druckluftverbindungen kann die Nennweite eines Magnetventiles auf einen Wert um 1,7 mm reduziert werden, was einen optimalen Wert für ein Pilotventil in Fahrzeug-Anwendungen darstellt: Er gewährleistet einerseits eine gute Stufbarkeit für den ausgesteuerten Bremsdruck und er ist andererseits nicht so klein, daß die üblichen Verschmutzungen von Druckluft in Fahrzeugen schon eine Rolle spielen.

Mit den erläuterten Maßnahmen lassen sich die Schaltzeiten für die Magnetventile auf ca. 6 ms reduzieren. Mit den reduzierten Schaltzeiten können sich schnell ändernde Sollwertvorgaben für den Bremsdruckregler realisiert werden, und am Ausgang (18) des Relaisventiles (2) sind hohe Gradienten für den ausgesteuerten Bremsdruck realisierbar.

Vorstehend wurde bereits beschrieben, daß entsprechend Fig. 1 die 2/2-Wege-Magnetventile (7), (8) und (9) durch ihre Parallelschaltung auch in vorteilhafter Weise gleichzeitig betätigt werden können, was die Druckauf- bzw. Druckabbauzeiten des Relaisventil-Steuerkammerdruckes verkürzt.

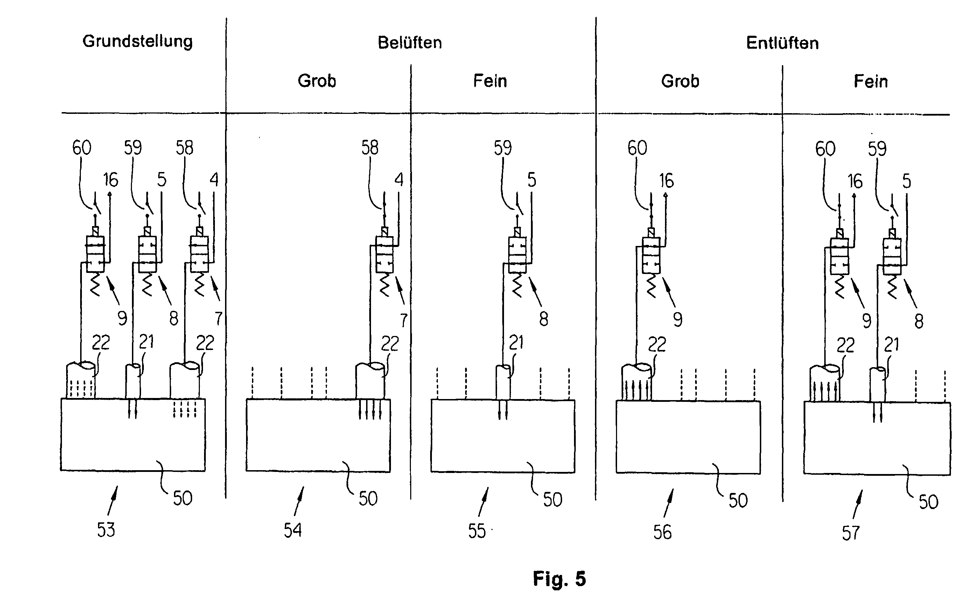

In Fig. 5 ist beispielhaft dargestellt, wie unter Verwendung dieser 3 Ventile das Prinzip des Schnell- und Fein-Regelns zu realisieren ist, was sowohl für alle Fahrer-vorgegebenen Bremsregelungen als auch für ABS-Regelungen anwendbar ist. Der einfacheren Darstellung halber wird im Folgenden auf die erläuterte Parallelschaltung von Ventilen zur Zeitverkürzung für das Schnell-Belüften, wie für das Schnell-Entlüften verzichtet. Fig. 5 basiert auf der Vorsteuereinheits-Schaltung nach Fig. 1.

In der Vorsteuereinheit (1) nach Fig. 1 dienen die Magnetventile (7), (8) und (9) als Pilotventile zur Belüftung oder Entlüftung der Relaisventil-Steuerkammer des Relaisventiles (2), deren Druck bis auf den durch die Hysterese [0.2 bis 0.5 bar] bestimmten Druckabfall im Relaisventil selbst dem ausgesteuerten Druck, der am Ausgang (18) des Relaisventiles (2) anliegt, entspricht; der Relaisventil-Druckabfall wird im Rahmen des geschlossenen Regelkreises von der elektronischen Steuereinrichtung (3) ausgeregelt.

Es ist daher die Aufgabe dieser drei Pilotventile, den Relaisventil-Steuerkammerdruck auf einen Druck einzustellen, der, abgesehen von der Regelabweichung, gleich dem von der elektronischen Steuereinrichtung (3) vorgegebenen Solldruck ist. Für diese Druckeinstellung gibt es die zwei unterschiedlichen Gesichtspunkte der Geschwindigkeit und der Genauigkeit, die sich gegenseitig widersprechen.

Im Rahmen der Druckeinstellung werden die Ventile getaktet, und zur Realisierung von hohen Geschwindigkeiten muß ein großer Ventilquerschnitt gewählt werden, was jedoch die Genauigkeit reduziert; umgekehrt wird bei einem kleinen Ventilquerschnitt eine hohe Genauigkeit, aber eine geringe Geschwindigkeit erreicht. Die Geschwindigkeit ist durch den maximalen Druckgradienten festgelegt, mit dem der vorgegebene Solldruck erreicht wird [bei Druckerhöhung Belüftungs-Gradient, bei Druckverringerung Entlüftungs-Gradient].

Um der Forderung nach einer ausreichenden Geschwindigkeit bei gleichzeitiger Einhaltung einer vorgegebenen Genauigkeit gerecht zu werden, ist es bekannt, zur Festlegung des Druckes in einer Relaisventil-Steuerkammer je zwei Belüftungsventile und je zwei Entlüftungsventile vorzusehen, wobei je ein Belüftungs- und ein Entlüftungsventil mit einem großen Querschnitt versehen sind, welcher die erforderliche Geschwindigkeit sicherstellt, und die jeweils anderen Belüftungs- bzw. Entlüftungsventile nur über einen kleinen Querschnitt verfügen, der die erforderliche Genauigkeit bewirkt. Durch Takten der Ventile mit großem Querschnitt kommt man schnell aber grob in den Bereich des Solldruckes und dann wird durch Takten der Ventile mit kleinem Querschnitt der Solldruck genau eingestellt.[Es gibt auch Lösungen mehr als zwei unterschiedlichen Querschnitten, diese sind aber sehr aufwendig.]

Diese bekannte Vorsteuereinheit mit vier Ventilen läßt sich in ihren Kosten reduzieren, indem ein Ventil eingespart wird und auf diese Weise nur drei Ventile benötigt werden, wobei eines dieser Ventile die für die Bremsdruckmodulator-Vorsteuereinheit erforderliche zusätzliche Funktion eines Redundanzventiles übernimmt.

Es wird das Entlüftungsventil mit kleinem Querschnitt eingespart, so daß nur noch ein Belüftungsventil mit großem, ein Belüftungsventil mit kleinem und ein Entlüftungsventil mit großem Querschnitt vorgesehen sind. Bei dieser Anordnung erfolgt das schnelle/langsame Belüften und das schnelle Entlüften, wie oben beschrieben, während zum langsamen Entlüften das Belüftungsventil mit dem kleinen Querschnitt parallel geschaltet wird zu dem Entlüftungsventil mit einem großen Querschnitt: Ein Teil des Entlüftungs-Luftstromes wird durch den belüftenden Luftstrom kompensiert, was zu einer Reduzierung des Entlüftungs-Luftstromes, das heißt zu einem insgesamt kleineren Entlüftungs-Luftstrom führt.

Eine mit der zuletzt beschriebenen Anordnung gleichwertige Ventilanordnung ist dadurch gegeben, wenn man, wie in Fig. 5 dargestellt, das Belüftungsventil (7) mit großem Querschnitt (22), das Entlüftungsventil (9) mit großem Querschnitt (22) und das entsprechend den nachstehenden Erläuterungen als Belüftungsventil wirkenden Redundanzventil (8) mit einem kleinen Querschnitt (21) versieht; analog zur oben beschriebenen Betriebsweise erfolgt bei dieser Konfiguration entsprechend dem Bezugszeichen (57) die feinfühlige Entlüftung durch Parallelschaltung des Entlüftungsventiles (9) mit seinem großen (22) und des Redundanzventiles (8) mit seinem kleinen Querschnitt (21) [es findet eine Parallelschaltung eines zur Druckverringerung bestimmten Ventiles mit einem zur Druckerhöhung bestimmten Ventil statt]. Die feinfühlige Belüftung erfolgt entsprechend dem Bezugszeichen (55) durch alleinige Betätigung des Redundanzventiles (8) mit seinem kleinen Querschnitt (21); das schnelle Belüften erfolgt durch alleinige Betätigung des Belüftungsventiles (7) [Bezugszeichen (54)] und das schnelle Entlüften durch alleinige Betätigung des Entlüftungsventiles (9) [Bezugszeichen (56)].

Der Verständlichkeit halber sind in der Fig. 5 die für die erläuterten Belüftungs- und Entlüftungsvorgänge verwendeten Ventile (7), (8) und (9) unter dem Bezugszeichen (53) in ihrer Grundstellung dargestellt. Die Stromschalter (58) [für erstes Magnetventil (7)], (59) [für zweites Magnetventil (8)] und (60) [für drittes Magnetventil (9)] sind in dieser Darstellung als offene Schalter gezeichnet, was dem unbetätigten Zustand dieser Magnetventile entspricht. Bei den einzelnen Belüftungs- wie Entlüftungsfällen entsprechend den Bezugszeichen (54), (55), (56) und (57) sind die Stromschalter der jeweils beteiligten Magnetventile entweder im geschlossenen Zustand gezeichnet, was bedeutet, daß das entsprechende Ventil betätigt ist, oder sie sind offen, was beschreibt, daß das entsprechende Magnetventil unbetätigt ist. So kann der Betätigungszustand der Ventile für jeden einzelnen Belüftungs- oder Entlüftungsfall in einfacher Weise aus Fig. 5 abgelesen werden.

Bei den oben beschriebenen Ventilkombinationen, sowohl bei solchen mit 4 Ventilen, als auch bei den zuletzt beschriebenen beiden Ventilkombinationen mit 3 Ventilen, steht für die Belüftungsvorgänge, für die "schnellen" mit großem Ventilquerschnitt, ebenso wie für die "genauen" mit kleinem Ventilquerschnitt als Druckquelle der Versorgungsdruck zur Verfügung. Die erfindungsgemäße Ventilschaltung nach Fig. 1 löst sich von dem ausschließlichen Bezug der Belüftungsvorgänge auf den Versorgungsdruck, indem in der erfindungsgemäßen Ventilschaltung nach Fig. 1 das Redundanzventil (8) über den zweiten Eingang (5) der Vorsteuereinheit (1) mit dem Redundanzdruck verbunden ist. Wie erläutert dient das Redundanzventil (8) zur Feinbelüftung und verfügt über einen kleinen Ventilquerschnitt (21), wogegen das Belüftungsventil (7) und das Entlüftungsventil (9) für die Grobbelüftung vorgesehen und dadurch mit einem großen Ventilquerschnitt (22) ausgerüstet sind.

Bei der praktischen Auslegung wird z. B. für das Redundanzventil (8) ein Ventilquerschnitt von etwa 2,3 mm² gewählt, was einer Nennweite von ca. 1,7 mm entspricht. Dieser Ventilquerschnitt stellt einen optimalen Wert für ein solches Feinbelüftungs-Pilotventil in Fahrzeug-Anwendungen dar: Er gewährleistet einerseits eine gute Stufbarkeit für den ausgesteuerten Bremsdruck und er ist andererseits nicht so klein, daß die üblichen Verschmutzungen von Druckluft in Fahrzeugen schon eine Rolle spielen.

Für den großen Ventilquerschnitt (22) der Grobbelüftung wird man einen Wert wählen, der bezogen auf den Feinbelüftungs-Luftstrom einen um 50 bis 100 % erhöhten Luftstrom zur Folge hat. Bei einem um 50 % erhöhten Luftstrom ergibt sich ein Grobbelüftungs-Ventilquerschnitt von etwa 3,4 mm², was eine Nennweite von ca. 2,1 mm bedeutet, und bei einer gewünschten Erhöhung um 100 % ergibt sich ein Ventilquerschnitt von etwa 4,5 mm², was einer Nennweite von etwa 2,4 mm entspricht.

Es sei ergänzt, daß bei Bedarf der Grobbelüftungs-Ventilquerschnitt auch größer gewählt werden kann, damit das Verhältnis von Grobbelüftungs-Luftstrom zu Feinbelüftungs-Luftstrom bis auf ein Mehrfaches erhöht werden kann.

Bei einer vom Fahrer eingeleiteten Bremsung liegt das dieser Bremsung entsprechende elektrische Bremsanforderungssignal praktisch verzögerungsfrei über die Leitung (20) an der elektrischen Steuereinrichtung (3) an. Der dieser Bremsung entsprechende Redundanzdruck baut sich beim zweiten Eingang (5) der Vorsteuereinheit (1) verzögert auf, was durch die Verzögerungen im Anhängerbremsventil und in den Druckleitungen bedingt ist. Nach diesen Verzögerungen entspricht der Redundanzdruck dem Fahrerwillen ohne Beeinflussung durch die beladungsabhängige Bremskraftregelung, die zur Folge hat, daß der für eine Radachse ausgesteuerte Bremsdruck unter Umständen geringer ist als der Redundanzdruck. Auch ist der durch eine ABS-Regelung reduzierte Bremsdruck an einer Radbremse natürlich geringer als der Redundanzdruck. Dieser vom Fahrer vorgegebene Redundanzdruck stellt also, von seltenen Ausnahmen abgesehen, die Obergrenze für alle Bremsdrücke an den Radbremsen des Anhänger-Fahrzeuges dar. Da der Redundanzdruck einerseits kleiner ist als der Vorratsdruck, er aber andererseits immer noch die Obergrenze aller Bremsdrücke darstellt, eignet er sich besonders gut als Druckquelle für die Feinbelüftung [vorstehend ist bereits erläutert, daß zur Feinbelüftung ein geeignet dimensionierter, kleiner Ventilquerschnitt verwendet wird].

Da der elektronischen Steuereinrichtung (3) über den erläuterten, am Anhängerbremsventil angeordneten Drucksensor der zu einem jeweiligen Zeitpunkt am zweiten Eingang (5) der Vorsteuereinheit (1) anliegende Redundanzdruck bekannt ist, wird der augenblickliche Redundanzdruck in den Algorithmen für die Festlegung der Taktzeiten für die Pilotventile, wie unten erläutert, mit berücksichtigt.

Bei einer neuen, angenommen großen Bremswertvorgabe durch den Fahrer erfolgt die Belüftung der Relaisventil-Steuerkammer entsprechend dem Bezugszeichen (54) zunächst "grob" durch das Belüftungsventil (7) mit seinem großen Ventilquerschnitt (22). Maßgebend für die von der elektronischen Steuereinheit (3) gewählte Taktzeit des Belüftungsventiles (7) ist zunächst der vorgegebene elektrische Bremssollwert, der in bekannter Weise, z. B. unter Berücksichtigung der Beladung des Fahrzeuges in einen geeigneten Soll-Bremsdruck für die Radbremsen einer Fahrzeugachse umgerechnet wird, welcher letztendlich im Rahmen der Regelung am Ausgang (19) des Relaisventiles (2) ausgesteuert wird. Weiter ist für die Bestimmung der Taktzeit die am Belüftungsventil (7) anliegende Druckdifferenz maßgeblich, die den Luftstrom zur Relaisventil-Steuerkammer bewirkt; da die Relaisventil-Steuerkammer von der vorher gegangenen Bremsung bis zum jetzigen Bremsanfang entlüftet war, ist diese Druckdifferenz gleich dem versorgungsdruck selbst.

In Kenntnis des festgelegten großen Ventilquerschnittes (22) ist die gewählte Taktzeit für das Belüftungsventil (7) z. B. proportional zur Druckdifferenz und zum Soll-Bremsdruck, wobei die Ventilschaltzeit selbst in geeigneter Weise zu berücksichtigen ist [die Exponentialfunktion der Belüftung wird durch eine Gerade angenähert, deren Steigerung dem Produkt aus Druckdifferenz und Soll-Bremsdruck entspricht].

Nach der Grobbelüftung hat sich in der Relaisventil-Steuerkammer ein Druck eingestellt, der angenommen um einen Wert Δp kleiner sein soll als der Soll-Bremsdruck. Im Rahmen der anschließenden Feinbelüftung [entsprechend den Erläuterungen zum Bezugszeichen (57)] durch das Redundanzventil (8) soll der Wert Δp zu Null werden. Die Taktzeit des Redundanzventiles (8) wird daher so bestimmt, daß die am Ventil anliegende Druckdifferenz, welche die Differenz aus dem augenblicklichen Redundanzdruck und dem Relaisventil-Steuerkammerdruck darstellt [dieser ist näherungsweise gleich dem ausgesteuerten Druck am Ausgang (18)], mit dem bekannten kleinen Ventilquerschnitt (21) einen Luftstrom bewirkt, der nach Abschluß des Belüftungspulses zur Folge hat, daß in der Relaisventil-Steuerkammer der Soll-Bremsdruck anliegt. Diese Taktzeit ist daher proportional zu der am Ventil anliegenden Druckdifferenz und zu der gewünschten Druckerhöhung Δp.

Soll ein bestehender Bremsdruck vollständig abgebaut werden, so erfolgt dies in der erläuterten Weise [Bezugszeichen (56)] über das Entlüftungsventil (9). Die Taktzeit ergibt sich in der oben erläuterten Weise aus dem großen Ventilquerschnitt (22) und der Druckdifferenz über dem Entlüftungsventil (9).

Soll dagegen ein bestehender Bremsdruck nur geringfügig abgebaut werden, so erfolgt die Entlüftung des Relaisventil-Steuerraumes in der unter dem Bezugszeichen (57) erläuterten Weise über die Parallelschaltung des Entlüftungsventiles (9) und des Redundanzventiles (8). Der von dem Entlüftungsventil (9) bewirkte Entlüftungs-Luftstrom [abhängig von der Druckdifferenz über dem Entlüftungsventil (9), d. h. abhängig von dem Relaisventil-Steuerkammerdruck] wird durch den Belüftungs-Luftstrom über dem Redundanzventil (8) verringert [dieser Luftstrom ist abhängig von der Druckdifferenz zwischen dem augenblicklichen Redundanzdruck und dem Relaisventil-Steuerkammerdruck]. Die Taktzeit, in der beide Ventile gleichzeitig betätigt sind, ist so gewählt, daß die Überlagerung beider Luftströme den gewünschten Bremsdruck-Abbau in der Relaisventil-Steuerkammer zur Folge hat.

Wie oben bereits angedeutet, kann nach dem unter Fig. 4 erläuterten Realisierungsprinzip auch die bekannte Vorsteuereinheit nach der eingangs genannten Schrift DE 42 27 084 A1 realisiert werden. Auch bei einer in dieser Weise aufgebauten Vorsteuereinheit kann der Redundanzdruck zur Aussteuerung eines vom Fahrer vorgegebenen Bremsdruckes in vorteilhafter Weise mit berücksichtigt werden.

Bei Betätigung des Bremspedals soll der im Anhänger ausgesteuerte Bremsdruck zunächst mit dem größtmöglichen Gradienten ansteigen. Hierzu wird in einer ersten Phase das 3/2-Wege-Umschaltventil [dort Figur 2, (12)] betätigt, so daß der Vorratsdruck [dort (17)] über das unbetätigte Entlüftungsventil [dort (9')] und das ebenfalls unbetätigte Sperrventil [dort (7)] in die Steuerkammer des Relaisventiles [dort (3)] übertragen wird. Diese Grobbelüftung wird beibehalten, bis sich der ausgesteuerte Bremsdruck hinreichend an den durch die Stellung des Bremspedals vorgegebenen Fahrerwunsch-Bremsdruck angenähert hat; in Phase 1 wird dieser Bremsdruck in der kürzestmöglichen Zeit näherungsweise erreicht, wie dies bei der vorgegebenen pneumatischen Auslegung der Anlage überhaupt möglich ist.

Dann wird in einer zweiten Phase eine Feinbelüftung durchgeführt, wozu das 3/2-Wege-Umschaltventil in den unbetätigten Zustand versetzt wird, so daß nun ab diesem Zeitpunkt die weitere Belüftung der Relaisventil-Steuerkammer über die weiterhin unbetätigten Ventile [dort (9') und (7)] erfolgt. Aufgrund des geringen Druckunterschiedes zwischen dem Redundanzdruck und dem vom Relaisventil ausgesteuerten Bremsdruck wird bei dieser Feinbelüftung im Normalfall kein Überschwingen eintreten, so daß in Phase 2 ein optimales Einschwingverhalten des ausgesteuerten Bremsdruckes gewährleistet ist.

Entsprechend den vorstehenden Erläuterungen wird der geeignete Zeitpunkt, um von der ersten Phase in die zweite Phase überzugehen, durch den Druckmeßwert des im Anhängerbremsventil angeordneten Drucksensors bestimmt.

Sollte es in Sonderfällen im Rahmen der Feinbelüftung doch zu einer Überschreitung des Fahrerwunsch-Bremsdruckes kommen, so wird dieser Drucküberschuß durch eine kurze Betätigung des Entlüftungsventils [dort (9')] wieder abgebaut.

Entscheidend für die Funktionsfähigkeit dieser Realisierungsvariante für die bekannte Vorsteuereinheit ist, daß die verwendeten Magnetventile entsprechend den unter Fig. 4 erläuterten Prinzipien aufgebaut sind, und daß sie dadurch in taktender Weise zu betätigen sind.

Es ist allerdings vorteilhaft für das oben erläuterte 2-phasige Belüftungsverfahren auch die pneumatische Vorsteuereinheits-Schaltung nach Fig. 1 zu verwenden, da dort nur 2/2-Wege-Magnetventile eingesetzt sind, und auf die Verwendung eines leicht aufwendigeren 3/2-Wege-Magnetventiles verzichtet wird. Bei dieser Realisierung findet die Grobbelüftung in Phase 1 durch Betätigen des ersten Magnetventiles (7) statt, wobei gleichzeitig das stromlos offene zweite Magnetventil (8) betätigt wird, um dieses Ventil in die Absperrstellung zu bringen. In Phase 2 bleibt das zweite Magnetventil (8) zur Belüftung mit dem Redundanzdruck unbetätigt [die Ventile (7) und (9) sind ebenfalls unbetätigt] und zum Abschluß von Phase 2 wird das zweite Magnetventil (8) betätigt, um es wieder in seine Absperrstellung zu bringen. Für Entlüftungsvorgänge wird das dritte Magnetventil (9) betätigt.

Durch die pneumatische Verbindung des Ausgangs des Anhängerbremsventiles mit dem zweiten pneumatischen Eingang (5) der Vorsteuereinheit (1) mißt der im Anhängerbremsventil angeordnete Drucksensor den Druck am zweiten pneumatischen Eingang (5) [von kurzen dynamischen Druckausgleichsvorgängen, die in diesem Zusammenhang vernachlässigbar sind, wird hier abgesehen]. Der Druck-Meßwert am zweiten pneumatischen Eingang (5) der Vorsteuereinheit (1) bestimmt also den geeigneten Zeitpunkt des Überganges von der ersten zur zweiten Phase.

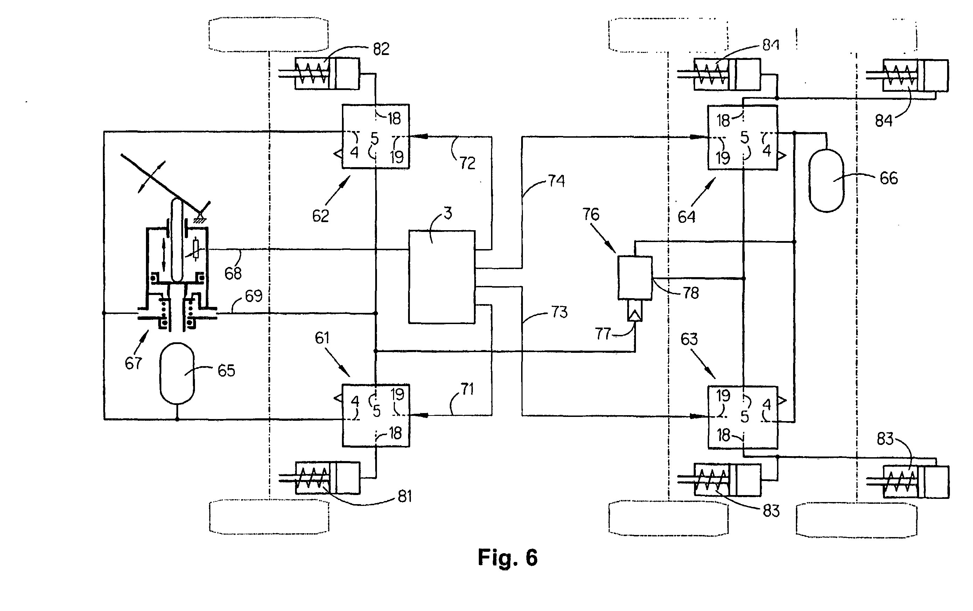

Das Verfahren, Magnetventile der Vorsteuereinheit parallel zu schalten, läßt sich in vorteilhafter Weise auch auf ein Zugfahrzeug anwenden. Die Anordnung der Komponenten einer derartigen elektronischen Bremsanlage ist in Fig. 6 dargestellt. Im erläuterten Ausführungsbeispiel sind Bremsdruckmodulatoren für die Räder eines zweiachsigen Zugfahrzeugs vorgesehen, die Hinterachse ist dabei als Doppelachse ausgeführt. Der Übersicht halber sind die Bremsdruckmodulatoren als jeweils einzelne Blöcke dargestellt; jeder Block enthält daher die Kombination einer Vorsteuereinheit (1) mit einem Relaisventil (2) nach Fig. 1. An den Anschlußstellen der Blöcke sind an den nach innen weisenden Verbindungen der Anschluß für den Vorratsdruck am ersten pneumatischen Eingang (4) der Vorsteuereinheit (1), der Anschluß für den Redundanzdruck am zweiten pneumatischen Eingang (5) der Vorsteuereinheit(1), die Anschlüsse für die Eingänge der elektrischen Steuerleitung (19) der Vorsteuereinheit(1) und der Anschluß für den Ausgang (18) des Relaisventils (2) bezeichnet; mit diesen Bezeichnungen und den externen Anschlüssen an die Blöcke ist die pneumatisch-elektrische Verschaltung der Bremsdruckmodulator-Blöcke vollständig dargestellt.

Der Bremsdruckmodulator (61) ist für das Rad an der Vorderachse links, der Bremsdruckmodulator (62) ist für das Rad an der Vorderachse rechts, der Bremsdruckmodulator (63) ist für die Räder an der hinteren Doppelachse links, und der Bremsdruckmodulator (64) ist für die Räder an der hinteren Doppelachse rechts vorgesehen.

Die elektronische Bremsanlage ist mit einer Kreistrennung ausgerüstet, was bedeutet, daß für die Vorderachse ein erster Luftbehälter (65) und für die Hinterachse ein zweiter Luftbehälter (66) eingesetzt wird. Die für den Vorratsdruck vorgesehenen ersten pneumatischen Anschlüsse (4) der Bremsdruckmodulatoren (61, 62) für die Vorderachse sind an dem ersten Luftbehälter (64) und die entsprechenden pneumatschen Anschlüsse (4) der Bremsdruckmodulatoren (63, 64) für die Hinterachse sind an den zweiten Luftbehälter (66) angeschlossen.

In elektronisch geregelten Bremsanlagen in der Zugmaschine gibt der Fahrer die Sollverzögerung durch einen elektropneumatischen Bremswertgeber vor. Der Bremswertgeber enthält einerseits elektrische Sensoren, die einen dem Fahrzeugsollverzögerungswert entsprechenden Wert an die elektronische Steuereinheit übergeben, andererseits betätigt der Fahrerfuß mechanisch weg-kraftgesteuerte pneumatische Ventile, die einen oder mehrere redundante Bremsdrücke erzeugen. Diese ebenfalls der Sollverzögerung proportionalen Drücke werden als Hilfsbremsdrücke verwendet, die bei Ausfall eines oder mehrerer Bremskreise auf die Betätigungsventile und damit zur Einbremsung der Radbremszylinder geschaltet werden.

Diese Redundanzdrücke können bei Bremsdruckmodulatoren als Steuerdrücke für die Redundanzdruckventile verwendet werden; in Fig. 6 ist für die Bremsdruckmodulatoren (61, 62, 63, 64), wie nachstehend erläutert, ein Redundanzdruck (69) vorgesehen.

In der beschriebenen Weise erzeugt der Bremswertgeber (67) das elektrische Bremsanforderungssignal (68) [den Fahrzeugsollverzögerungswert] und den pneumatischen Redundanzdruck (69); der Bremswertgeber-Druckversorgungseingang ist an den ersten Luftbehälter (65) angeschlossen. Die Darstellung des Bremswertgebers (67) zeigt in vereinfachter Weise, wie durch das Bremspedal ein Stößel gegen die Kraft einer Rückstellfeder betätigt wird und am Ausgang einer nach dem Prinzip des Relaisventils aufgebauten Ventileinrichtung der der Stößelbetätigung entsprechende pneumatische Redundanzdruck (69) erzeugt wird. Die Stößelbetätigung wird in diesem Beispiel außerdem potentiometrisch abgegriffen und ein diesem Abgriff entsprechender Spannungspegel stellt das elektrische Bremsanforderungssignal (68) dar. Als Beispiel für eine praktische Ausführungsform eines Bremswertgebers sei die DE 33 08 279 A1 [der Bremswertgeber ist dort als Motorwagen-Bremsventil bezeichnet] genannt.

Das elektrische Bremsanforderungssignal (68) wird der elektronischen Steuereinrichtung (3) zugeführt; in der elektronischen Steuereinrichtung werden nach den Prinzipien elektronischer Bremsanlagen aus diesem Bremsanforderungssignal, zusammen mit anderen Informationen wie z. B. der Beladung, Bremsdrücke für die einzelnen Räder des Fahrzeugs berechnet und aufgrund dieser berechneten Soll-Bremsdrücke werden Steuersignale an die Bremsdruckmodulatoren ausgegeben. Für den Bremsdruckmodulator (61) vorne links sind dies die Steuersignale (71), für den Bremsdruckmodulator (62) vorne rechts sind es die Steuersignale (72), für den Bremsdruckmodulator (63) hinten links sind es die Steuersignale (73) und für den Bremsdruckmodulator (64) hinten rechts sind es die Steuersignale (74).

Ergänzt sei, daß ein in einem Bremsdruckmodulator mit Hilfe der Steuersignale erzeugter Druck [dies ist der Eingangsdruck des zugeordneten Relaisventils] zur Druckregelung in der elektronischen Steuereinheit (3) mit Hilfe von je einem Drucksensor gemessen wird. Diese Drucksensoren sind,der Übersichtlichkeit halber in Fig. 6 nicht eingezeichnet.

Die in der erläuterten Weise in den Bremsdruckmodulatoren erzeugten individuellen Bremsdrücke werden in den Radbremszylinder (81) an der Vorderachse links, in den Radbremszylinder (82) an der Vorderachse rechts, in die beiden Radbremszylinder (83) an der hinteren Doppelachse auf der linken Seite und in die beiden Radbremszylinder (84) an der hinteren Doppelachse auf der rechten Seite eingespeist.

Der Redundanzdruck wird, auf die gleiche Weise wie dies oben in der Anwendung bei einem Anhängerfahrzeug erläutert ist, direkt in den Vorsteuereinheiten der Bremsdruckmodulatoren verarbeitet, mit dem Unterschied, daß der Redundanzdruck, der beim Anhängefahrzeug vom Anhängerbremsventil geliefert wird, beim Zugfahrzeug, wie vorstehend erläutert, direkt vom Bremswertgeber erzeugt wird. Wie in Fig. 6 gezeigt, ist der vom Bremswertgeber (67) erzeugte Redundanzdruck (69) pneumatisch an die Redundanzdruck-Eingänge (5) in den Vorsteuereinheiten der Bremswertgeber (61, 62) an der Vorderachse links und rechts angeschlossen. Um die Kreistrennung sicherzustellen [sie bewirkt, daß im Falle einer Leckage nur der Luftbehälter des von der Leckage betroffenen Kreises drucklos wird, der andere Luftbehälter jedoch seinen Druck hält, so daß dieser Kreis weiter funktionsfähig bleibt] wird der Redundanzdruck zur Eingabe an die Bremsdruckmodulatoren (63, 64) der Hinterachse über ein vom zweiten Luftbehälter (66) versorgtes Relaisventil (76) "gepuffert".

Der Eingang (77) des Relaisventils (76) ist pneumatisch mit dem Redundanzdruck (69) verbunden. Das Relaisventil (76) hat eine Verstärkung von 1 und gibt daher an seinem Ausgang (78) den am Eingang (77) anliegenden Druck aus; über die Verbindung zu den Redundanzdruck-Eingängen (5) der Vorsteuereinheiten für die Bremsdruckmodulatoren (63, 64) liegt der Redundanzdruck auch an diesen Bremsdruckmodulatoren an.

Auch beim Zugfahrzeug läßt sich, wie in den Erläuterungen zu Fig. 5 beschrieben, durch eine Parallelschaltung von gleichsinnig wirkenden Ventilen [gleichzeitige Vorratsdruck-Belüftung und Redundanzdruck-Belüftung] die Druckaufbau-Zeit des Bremsdruckes verkürzen, während durch eine Parallelschaltung gegensinnig wirkender Ventile [Entlüftung gleichzeitig zu Redundanzdruck-Belüftung] der Bremsdruck feinstufig reduziert wird.

In anderen Worten: Im ersten Fall ergeben sich entsprechend der zusätzlichen Nennweite schnellere Druckänderungen in den Vorsteuerkammern der Relaisventile (2), und im zweiten Fall lassen sich die Eigenschaften der feinen Stufbarkeit der Vorsteuerkammerdrücke ebenfalls anwenden.

Diese Funktionsanordnung ermöglicht noch einen weiteren Vorteil: Wird der Redundanzventilpfad beispielsweise allein zum langsamen Druckaufbau bei einer Anpassungsbremsung im Teilbremsbereich gepulst betätigt, so erfolgt der Druckaufbau im Radbremszylinder im geschlossenen Regelkreis unter Sensierung des Zylinderdrucks. Hierbei ist die elektropneumatische Funktion des Redundanzdruckventils voll prüfbar. Dadurch ist die Ventilfunktion im Sinne einer funktionsbeteiligten Redundanz überwachbar und ein Ausfall dieser Ventileinheit kann dem Fahrer sofort angezeigt werden. Dieser Vorteil gilt sinngemäß auch für die Anhänger-Ausführungsform.

Gegenüber einer Redundanzventilfunktion, die nicht beteiligt ist am Aufbau des Betriebsbremsdrucks, ist dies ein großer Vorteil und Sicherheitsgewinn.

Beim oben erläuterten Einsatz des erfindungsgemäßen Verfahrens für ein Anhängerfahrzeug sind Beispiele für eine vorteilhafte Ausgestaltung der Nennweiten genannt; es sei angemerkt, daß diese Nennweiten für einen Einsatz in einem Zugfahrzeug wegen der dort herrschenden anderen Druckverhältnisse gegebenenfalls zu modifizieren sind.

Mit dem erfindungsgemäßen Verfahren der Parallelschaltung von Pilotventilen der Vorsteuereinrichtung findet, wie oben erläutert, eine Überlagerung von Luftströmen der beteiligten Ventile statt. Bei zwei Ventilen wird durch Überlagerung der Massestrom des einen Ventils mit dem Massestrom des anderen Ventils verknüpft, wobei die Verknüpfung entweder in einer Addition oder einer Subtraktion besteht; im Falle der Addition stellt der resultierende Massestrom die Summe der Masseströme beider Einzelventile dar und bei der Subtraktion ist der resultierende Massestrom gleich der Differenz beider Masseströme. [Diese Überlegungen gelten auch für die Volumenströme beider Ventile.]

Das Prinzip der Überlagerung von Masseströmen läßt sich von der Pneumatik auch auf die Hydraulik übertragen, so daß mit diesem Prinzip auch Bremsdruckmodulatoren für elektronisch-hydraulische Bremsanlagen realsierbar sind.

Die Auslegung eines derartigen Bremsdruckmodulators richtet sich natürlich nach den für einen bestimmten Anwendungsfall vorliegenden Gegebenheiten: Nach den üblicherweise wesentlich höheren Bremsdrücken in Hydraulikanlagen, die z. B. zur Folge haben, daß die Nennweiten der Ventile und die Hübe für die Ventilbetätigung üblicherweise kleiner sind als bei Pneumatikanwendungen; zumindest liegen dort andere Werte vor, die bei der Festlegung der Ventile zu berücksichtigen sind.

Bei Hydraulikanlagen ist zudem zu berücksichtigen, daß dort ein geschlossener Kreislauf unter Einbeziehung der Pumpe, des Tanks und gegebenenfalls eines Hydrospeichers vorliegt, was die dortige Ventiltechnik ebenfalls mit beeinflußt.

Darüber hinaus kann das erfindungsgemäße Verfahren auch für elektronisch geregelte Bremsanlagen in Schienenfahrzeugen verwendet werden; vorwiegend sind diese als elektronisch-pneumatische Anlagen ausgebildet. Bei diesen Schienenfahrzeugen gibt es - vergleichsweise zu der erläuterten Anlage in einem Straßenfahrzeug-Zugfahrzeug - einen Bremsgeber, der vom Fahrer an einem Fahrstand des Schienenfahrzeugs betätigt wird. Dieser Bremsgeber erzeugt sowohl ein elektrisches Signal als Verzögerungssollwert für die elektronische Steuerungseinrichtung, welche die Bremsregelung durchführt, als auch zumindestens ein pneumatisches Bremssignal, das im Falle des Ausfalls der Elektronik ein direktes Einbremsen über die Radbremszylinder des Schienenfahrzeugs bewirkt.

Insoweit liegt einem derartigen Bremssystem für ein Schienenfahrzeug [beziehungsweise für einen Schienenfahrzeugzug] die gleiche Struktur einer Komfort- und/oder verschleißorientierten Bremsung mit z. B. lastabhängiger Bremskraft für den Normalfall der funktionsfähigen Elektronik und einer Notbremsung für den Elektronik-Ausfall zugrunde, bei welchem ein separat erzeugter Redundanzdruck eine direkte pneumatische Bremsung veranlaßt. Im Normalfall der Bremsregelung ist natürlich auch der Gleit- und ggf. der Schleuderschutz aktiv, während diese Funktionen beim Elektronik-Ausfall abgeschaltet sind.

Aus diesem Grund lassen sich auch für ein derartiges Fahrzeug Bremsdruckmodulatoren nach dem Prinzip von Fig. 1 anwenden. Beispielsweise kann für jedes Rad eines Schienenfahrzeugzuges ein elektropneumatischer Bremsdruckmodulator vorgesehen sein, der entsprechend Fig. 1 aus einer Vorsteuereinheit (1) und einem Relaisventil (2) gebildet ist. Das Belüftungs-, das Entlüftungs- und das Redundanzventil einer derartigen Einrichtung richten sich nach den in dem Schienenfahrzeug vorliegenden Gegebenheiten; im Vergleich zu Straßenfahrzeugen liegen dort üblicherweise erheblich größere Nennweiten vor.

Abgesehen von diesen Auslegungsfragen ist aber das erfindungsgemäße Verfahren der Addition bzw. Subtraktion von Masseströmen einzelner Ventile zur Verbesserung der Druckaufbauzeit bzw. zur Verbesserung der Stufbarkeit auch hier einsetzbar.

## Patentansprüche

1. Vorsteuereinheit für einen Bremsdruckmodulator für mindestens einen Druckregelkreis einer elektronischen Bremsanlage, mit folgenden Merkmalen:
a) Es ist ein erster pneumatischer Eingang (4) vorgesehen, der mit dem Versorgungsdruck verbunden ist;
b) es ist ein zweiter pneumatischer Eingang (5) vorgesehen, der mit dem Ausgang einer Ventileinrichtung verbunden ist, die einen Redundanzdruck zur Verfügung stellt;
c) es ist ein pneumatischer Ausgang (6) vorgesehen, der mit einer luftmengenverstärkenden Ventileinrichtung verbunden ist;
d) die Vorsteuereinheit ist aus elektrisch ansteuerbaren Ventileinrichtungen aufgebaut, deren pneumatische Anschlüsse in bestimmter Weise miteinander verschaltet sind und deren elektrische Anschlüsse mit Ausgängen einer elektronischen Steuereinrichtung verbunden sind;
e) der elektronischen Steuereinrichtung ist eingangsseitig eine vom Fahrer initiierte elektrische Bremswertvorgabe zugeführt;
f) in dem durch eine fehlerfreie Elektronik bestimmten Normalbetrieb ist der Druck am pneumatischen Ausgang durch die elektrische Bremswertvorgabe bestimmt;
g) in dem durch eine fehlerhafte Elektronik bestimmten Redundanzbetrieb ist der Druck am pneumatischen Ausgang gleich dem Redundanzdruck;
**gekennzeichnet durch** das folgende Merkmal:
h) auch im Normalbetrieb ist der Druck am pneumatischen Ausgang **durch** den am zweiten pneumatischen Eingang anliegenden Redundanzdruck beeinflußt.

2. Vorsteuereinheit nach Anspruch 1, **dadurch gekennzeichnet, daß** mit der Beeinflussung durch den Redundanzdruck am pneumatischen Ausgang eine Verkürzung der Druckanstiegs- bzw. Druckabfalls-Zeit gegeben ist.

3. Vorsteuereinheit nach Anspruch 2, **dadurch gekennzeichnet, daß** zur Verkürzung der Druckanstiegs- bzw. der Druckabfalls-Zeit eine Parallelschaltung von mindestens zwei elektrisch ansteuerbaren Ventileinrichtungen vorgesehen ist.

4. Vorsteuereinheit nach Anspruch 1, **dadurch gekennzeichnet, daß** mit der Beeinflussung durch den Redundanzdruck am pneumatischen Ausgang eine Verbesserung der Stufbarkeit gegeben ist.

5. Vorsteuereinheit nach Anspruch 4, **dadurch gekennzeichnet, daß** zur Verbesserung der Stufbarkeit eine Parallelschaltung einer zu einer Druckverringerung bestimmten und einer zur Druckerhöhung bestimmten Ventileinrichtung vorgesehen ist.

6. Vorsteuereinheit nach Anspruch 3 oder 5, **dadurch gekennzeichnet, daß** die elektrisch ansteuerbaren Ventileinrichtungen als schaltende Magnetventile ausgestaltet sind, die in taktender Betriebsweise zu betreiben sind.

7. Vorsteuereinheit nach einem der Ansprüche 3, 5 oder 6, **dadurch gekennzeichnet, daß** für mindestens eines der Magnetventile ein in Bezug auf die jeweils anderen Magnetventile unterschiedlicher Durchflußquerschnitt festgelegt ist.

8. Vorsteuereinheit nach mindestens einem der Ansprüche 6 oder 7, **dadurch gekennzeichnet, daß** die Magnetventile als 2/2-Wege-Magnetventile ausgeführt sind.

9. Vorsteuereinheit nach Anspruch 8, **gekennzeichnet durch** die folgenden Merkmale:
a) Für die Vorsteuereinheit sind drei 2/2-Wege-Magnetventile vorgesehen;
b) ein erstes stromlos geschlossenes 2/2-Wege-Magnetventil mit einem ersten und einem zweiten Anschluß ist als Belüftungsventil für den Vorratsdruck vorgesehen;
c) ein zweites stromlos offenes 2/2-Wege-Magnetventil mit einem ersten und einem zweiten Anschluß ist als Belüftungs-/Entlüftungsventil für den Redundanzdruck vorgesehen;
d) ein drittes stromlos geschlossenes 2/2-Wege-Magnetventil mit einem ersten und einem zweiten Anschluß ist als Entlüftungsventil vorgesehen.

10. Vorsteuereinheit nach einem der Ansprüche 5 bis 9, **gekennzeichnet durch** die folgenden Merkmale:
a) Bei stromlosem Magneten ist für den Magnetanker in einem Ventilgehäuse, das dem entsprechenden Magnetventil zugeordnet ist, eine erste Hubbegrenzung vorgesehen, die **durch** die Wirkung einer Magnetanker-Rückstellfeder eingenommen ist;
b) bei bestromtem Magneten ist für den Magnetanker in dem Ventilgehäuse des entsprechenden Magnetventiles eine zweite Hubbegrenzung vorgesehen, die **durch** die Wirkung der auf den Magnetanker wirkenden Magnetkraft eingenommen ist;
c) die erste Hubbegrenzung ist als Dichtsitz mit hermetischer Dichtung ausgebildet;
d) die zweite Hubbegrenzung ist als Dichtsitz ausgebildet.

11. Vorsteuereinheit nach Anspruch 10, **dadurch gekennzeichnet, daß** sowohl jeweils die Magnetanker als auch jeweils die Magnetspulen der Magnetventile identisch aufgebaut sind.

12. Vorsteuereinheit nach einem der Ansprüche 9 bis 11, **gekennzeichnet durch** die folgenden Merkmale:
a) Der erste pneumatische Eingang ist mit dem ersten Anschluß des ersten 2/2-Wege-Magnetventiles und der pneumatischen Ausgang ist mit dem zweiten Anschluß des ersten 2/2-Wege-Magnetventiles verbunden;
b) der zweite pneumatische Eingang ist mit dem ersten Anschluß des zweiten 2/2-Wege-Magnetventiles verbunden und der pneumatischen Ausgang ist mit dem zweiten Anschluß des zweiten 2/2-Wege-Magnetventiles verbunden;
c) der pneumatische Ausgang ist mit dem ersten Anschluß des dritten 2/2-Wege-Magnetventiles verbunden und der zweite Anschluß des dritten 2/2-Wege-Magnetventiles ist mit einer Drucksenke verbunden.

13. Vorsteuereinheit nach Anspruch 1, **gekennzeichnet durch** die folgenden Merkmale:
a) Für eine Belüftung des pneumatischen Ausgangs sind zwei zeitliche Phasen vorgesehen;
b) in der ersten Phase ist eine Grobbelüftung über eine mit dem ersten pneumatischen Eingang verbundene Ventileinrichtung vorgesehen;
c) in der zweiten Phase ist eine Feinbelüftung über eine mit dem zweiten pneumatischen Eingang verbundene Ventileinrichtung vorgesehen.

14. Vorsteuereinheit nach Anspruch 13, **dadurch gekennzeichnet, daß** der Zeitpunkt des Übergangs von der ersten zur zweiten Phase durch den Meßwert des am zweiten pneumatischen Eingang anliegenden Drucks bestimmt ist.

## Claims

1. Pilot control unit for a brake pressure modulator for at least one pressure control circuit of an electronic braking system, having the following features:
a) a first pneumatic input (4) connected to the supply pressure is provided,
b) a second pneumatic input (5) connected to the output of valve device that makes a redundancy pressure available is provided;
c) a pneumatic output (6) connected to an air volume-boosting valve device is provided;
d) the pilot control unit comprises electrically activatable valve devices, the pneumatic connections of which are interconnected in a specific manner and the electrical connections of which are connected to outputs of an electronic control device;
e) the electronic control device is supplied on its input side with an electrical braking value requirement initiated by the driver;
f) in normal operation determined by fault-free electronics the pressure at the pneumatic output is determined by the electrical braking value requirement;
g) in redundancy operation determined by defective electronics the pressure at the pneumatic output is the same as the redundancy pressure;
**characterised by** the following feature:
h) in normal operation the pressure at the pneumatic output is also influenced by the redundancy pressure present at the second pneumatic input.

2. Pilot control unit according to claim 1, **characterised in that** the influence of the redundancy pressure at the pneumatic output causes a reduction in pressure build-up or pressure reduction times.

3. Pilot control unit according to claim 2, **characterised in that** to reduce the pressure build-up or pressure reduction times, a parallel circuit of at least two electrically controllable valve devices is provided.

4. Pilot control unit according to claim 1, **characterised in that** the influence of the redundancy pressure at the pneumatic output causes an improvement in fineness of control.

5. Pilot control unit according to claim 4, **characterised in that**, to improve the fineness of control, a parallel circuit of a valve device intended for pressure reduction and a valve device intended for pressure increase is provided.

6. Pilot control unit according to claim 3 or 5, **characterised in that** the electrically activatable valve devices are in the form of switching solenoid valves which are to operated under clock control.

7. Pilot control unit according to any one of claims 3, 5 or 6, **characterised in that** for at least one of the solenoid valves a flow area that is different in relation to the respective other solenoid valves is provided.

8. Pilot control unit according to at least one of claims 6 and 7, **characterised in that** the solenoid valves are in the form of 2/2-way solenoid valves.

9. Pilot control unit according to claim 8, **characterised by** the following features:
a) three 2/2-way solenoid valves are provided for the pilot control unit;
b) a first 2/2-way solenoid valve closed at zero current and having a first and a second connection is provided as air-intake valve for the supply pressure;
c) a second 212-way solenoid valve open at zero current and having a first and a second connection is provided as air-intake/air relief valve for the redundancy pressure;
d) a third 2/2-way solenoid valve closed at zero current and having a first and a second connection is provided as air relief valve.

10. Pilot control unit according to any one of claims 5 to 9, **characterised by** the following features:
a) when the magnet is without current, a first lift limitation which is accommodated by the action of a solenoid valve restoring spring is provided for the armature in a valve housing that is associated with the corresponding solenoid valve;
b) when the magnet is supplied with current, a second lift limitation which is accommodated by the action of the magnetic force acting on the armature is provided for the armature in the valve housing of the corresponding solenoid valve;
c) the first lift limitation is in the form of a sealing seat effecting an hermetic seal;
d) the second lift limitation is in the form of a sealing seat.

11. Pilot control unit according to claim 10, **characterised in that** each of the armatures and each of the magnet coils are of respective identical construction.

12. Pilot control unit according to any one of claims 9 to 11, **characterised by** the following features:
a) the first pneumatic input is connected to the first connection of the first 2/2-way solenoid valve and the pneumatic output is connected to the second connection of the first 212-way solenoid valve;
b) the second pneumatic input is connected to the first connection of the second 2/2-way solenoid valve and the pneumatic output is connected to the second connection of the second 2/2-way solenoid valve;
c) the pneumatic output is connected to the first connection of the third 2/2-way solenoid valve and the second connection of the third 2/2-way solenoid valve is connected to a pressure sink.

13. Pilot control unit according to claim 1, **characterised by** the following features:
a) two time phases are provided for air intake of the pneumatic output;
b) in the first phase a coarse air intake is provided via a valve device connected to the first pneumatic input;
c) in the second phase a precision air intake is provided via a valve device connected to the second pneumatic input.

14. Pilot control unit according to claim 13, **characterised in that** the time point of the transition from the first to the second phase is determined by the measured value of the pressure present at the second pneumatic input.

## Revendications

1. Unité de commande pilote pour un modulateur de la pression de freinage pour au moins un circuit de régulation de pression et d'un système de freinage électronique, présentant les caractéristiques suivantes:
a) il est prévu une première entrée pneumatique (4), qui est reliée à la pression d'alimentation;
b) il est prévu une seconde entrée pneumatique (5), qui est reliée à la sortie d'un dispositif à soupapes qui reçoit une pression de redondance;
c) il est prévu une sortie pneumatique (6), qui est reliée à un dispositif à soupape augmentant la quantité d'air;
d) l'unité de commande pilote est constituée par des dispositifs à soupapes commandés électriquement, dont les raccords pneumatiques raccordés entre eux de façon déterminée et dont les bornes électriques sont reliées à des sorties d'un dispositif de commande électronique;
e) une prédétermination électrique de valeur de freinage, déclenchée par le conducteur est envoyée côté entrée au dispositif de commande électronique;
f) dans le fonctionnement normal déterminé par un système électronique sans défaut, la pression au niveau de la sortie pneumatique est déterminée par la prédétermination électrique de la valeur de freinage;
g) un fonctionnement de redondance déterminé par un système électronique présentant un défaut, la pression au niveau de la sortie pneumatique est égale à la pression de redondance;
**caractérisée par** la caractéristique suivantes:
h) de même dans le fonctionnement normal, la pression à la sortie du pneumatique est influencée par la pression de redondance appliquée à la seconde entrée pneumatique.

2. Unité de commande pilote selon la revendication 1, **caractérisée en ce qu'**un raccourcissement de la durée de montée ou de retombée de la pression est produite par l'influence due à la pression de redondance au niveau de la sortie pneumatique.

3. Unité de commande pilote selon la revendication 2, **caractérisée en ce que** pour le raccourcissement du temps de montée et du temps de retombée de la pression, il est prévu un circuit parallèle comprenant au moins deux dispositifs à soupapes pouvant être commandés électriquement.

4. Unité de commande pilote selon la revendication 1, **caractérisée en ce qu'**une amélioration de la possibilité d'échelonnement est obtenue avec l'influence au moyen de la pression de redondance au niveau de la surface pneumatique.

5. Unité de commande pilote selon la revendication 4, **caractérisée en ce que** pour améliorer la capacité d'échelonnement, il est prévu un circuit parallèle formé par un dispositif à soupapes destiné à réaliser une réduction de pression et par un dispositif à soupape destiné à réaliser un accroissement de pression.

6. Unité de commande pilote selon la revendication 3 ou 5, **caractérisée en ce que** les dispositifs à soupapes pouvant être commandés électriquement sont agencés sous la forme de soupapes magnétiques à commutation, qu'il faut faire fonctionner selon un fonctionnement cadencé.

7. Unité de commande pilote selon l'une des revendications 3, 5 ou 6, **caractérisée en ce que** pour au moins l'une des soupapes magnétiques, une section transversale de passage différente de l'autre soupape magnétique est fixée.

8. Unité de commande pilote selon au moins l'une des revendications 6 ou 7, **caractérisée en ce que** les soupapes magnétiques sont agencées sous la forme de soupapes magnétiques à 2/2 voies.

9. Unité de commande pilote selon la revendication 8, **caractérisée par** les caractéristiques suivantes:
a) trois soupapes magnétiques à 2/2 voies sont prévues pour l'unité de commande pilote;
b) une première soupape magnétique à 2/2 voies fermée en l'absence de courant et comportant un premier raccord et un second raccord est prévue en tant que soupape d'aération pour la pression de réserve;
c) une seconde soupape magnétique à 2/2 voies ouvertes en l'absence de courant et comportant des premier et second raccords est prévue en tant que soupape d'aération/de désaération pour la pression de redondance;
d) une troisième magnétique à 2/2 voies fermée en l'absence de courant et comportant les premier et second raccords est prévue en tant que soupape de désaération.

10. Unité de commande pilote selon l'une des revendications 5 à 9, **caractérisée par** les caractéristiques suivantes:
a) dans le cas où l'aimant n'est pas alimenté en courant, pour l'armature magnétique dans un boîtier de soupape, qui est associé à la soupape magnétique correspondante, il est prévu une première limitation de course, qui est obtenue par l'action d'un ressort de rappel de l'armature magnétique;
b) dans le cas où l'aimant est alimenté en courant, il est prévu pour l'armature magnétique dans le boîtier de soupape la soupape magnétique correspondante, une seconde limitation de course, qui est réalisée au moyen de l'action de la force magnétique agissant sur l'armature magnétique;
c) la première limitation de course est agencée sous la forme d'un siège d'étanchéité comportant une garniture d'étanchéité hermétique;
d) la seconde limitation de course est réalisée sous la forme d'un siège d'étanchéité.

11. Unité de commande pilote selon la revendication 10, **caractérisée en ce qu'**aussi bien respectivement les bobines magnétiques des soupapes magnétiques sont agencées de façon identique.

12. Unité de commande pilote selon l'une des revendications 9 à 11, **caractérisée par** les caractéristiques suivantes:
a) la première entrée pneumatique est reliée au premier raccord de la première soupape magnétique à 2/2 voies et le raccord pneumatique est relié au second raccord de la première soupape magnétique à 2/2 voies;
b) la seconde entrée pneumatique est reliée au premier raccord de la seconde soupape à 2/2 voies et la sortie pneumatique est relié au second raccord de la seconde soupape magnétique à 2/2 voies;
c) la sortie pneumatique est reliée au premier raccord de la troisième soupape magnétique à 2/2 voies et le second raccord de la troisième soupape magnétique à 2/2 voies est relié à un absorbeur de pression.

13. Unité de commande pilote selon la revendication 1, **caractérisée par** les caractéristiques suivantes:
a) pour une aération de la sortie pneumatique, il est prévu deux phases temporelles;
b) dans la première phase, il est prévu une aération approximative au moyen d'un dispositif de soupape relié à la première entrée pneumatique;
c) pendant la seconde phase, il est prévu une aération précise au moyen d'un dispositif à soupape relié à la seconde entrée pneumatique.

14. Unité de commande pilote selon la revendication 13, **caractérisée en ce que** l'instant de la transition de la première phase à la seconde phase est déterminé par la valeur de mesure de la pression appliquée à la seconde entrée pneumatique.
